# EUROPÄISCHE PATENTSCHRIFT

(11) **EP 0 339 234 B1**
(45) Veröffentlichungstag und Bekanntmachung des Hinweises auf die Patenterteilung: **14.07.1993**
(21) Anmeldenummer: 89104560.1
(22) Anmeldetag: 15.03.1989
(51) Int. Cl.: F16L 37/04, E04D 13/14

(54) **Entlüftungsschlauch**
Ventilation hose
Tuyau souple de ventilation

(30) Priorität: 23.04.1988 DE 8805399 U; 11.02.1989 DE 3904106
(43) Veröffentlichungstag der Anmeldung: 02.11.1989
(73) Patentinhaber: Klöber, Johannes, 58256 Ennepetal (DE)
(72) Erfinder: Klöber, Johannes, 58256 Ennepetal (DE)
(74) Vertreter: Rieder, Hans-Joachim, Dr.

(56) Entgegenhaltungen:
- DE-A- 2 929 978
- DE-C- 1 000 195
- FR-A- 1 528 527
- FR-A- 2 436 929
- GB-A- 857 564
- US-A- 3 388 705
- US-A- 3 905 165

## Beschreibung

Die Erfindung betrifft einen einstückigen Entlüftungsschlauch gemäß Oberbegriff des Anspruchs 1.

Ein Entlüftungsschlauch dieser Art ist durch die DE-PS 29 29 978 bekannt. Solche Entlüftungsschläuche haben aufgrund des faltenbalgförmigen Mittelteils den Vorteil einer ausweichenden Führung bei Hindernissen am Dachstuhl, die aus verständlichen Gründen nicht ausgeräumt werden können, bspw. bei axialem Versatz der mit dem Entlüftungsschlauch zu verbindenden Leitungen. Die dabei meist recht engen Verlegeverhältnisse erfordern eine möglichst einfache Steckzuordnung der zu verbindenden Teile. Auch ist ein guter, über längste Gebrauchszeiten funktionsfähiger Dichtschluß erforderlich. Der genannte Vorläufer setzt dazu auch im pfannenseitigen Anschlußbereich zwischen Anschlußstutzen und Übersteckstuzen einen Gummiring ein. Der Übersteckstutzen weist dazu eine Ringnut auf. Solche Dichtmaßnahmen sind nicht in jedem Falle funktionssicher. Vor allem bei trockener Einlagerung und bspw. ungünstigen Toleranzpaarungen kann es zu einem Ausheben des Dichtungsringes durch den Stirnrand des Anschlußstutzens kommen. Außerdem kann der Montierende vergessen, einen Dichtungsring einzulegen. Dadurch ist, ebenfalls optisch nicht sofort erkennbar, die Festlegung zwischen Anschlußstutzen und Übersteckstutzen gefährdet. Erst allmählich löst sich diese Verbindung, so daß lange Zeit überhaupt gar nicht auffällt, daß die Abwassergase nicht ordnungsgemäß abgeführt werden. Auch gelangt dann ungehindert Regen- und Schwitzwasser in den Bereich des Dachstuhls. Ferner erfordert das Einlegen des Gummiringes einen zusätzlichen Arbeitsgang. Gleitet dem Monteur der Ring dabei aus der Hand, so ist dieses besonders ärgerlich, da der Ring vom Dach in tiefergelegene Geschosse fallen kann, so daß die Suche nach ihm sehr mühsam ist.

Ein gattungsgemäßer Entlüftungsschlauch ist durch die US-PS 33 88 705 bekannt. Auch hier handelt es sich um einen einstückigen, aus Kunststoff bestehenden Entlüftungsschlauch zur Verbindung einer Entlüftungsleitung mit einem Anschlußstutzen. Der Entlüftungsschlauch weist ein faltenbalgförmiges Mittelteil auf, an das sich einendig ein Einsteckstutzen für die Entlüftungsleitung und anderendig ein Übersteckstutzen für den Anschlußstutzen anschließt. Am Übersteckstutzen ist mindestens ein materialeinheitlich mit diesem ausgebildeter, in das Rohrinnere gerichteter, abdichtender Haltewulst ausgebildet. Hier besteht der Haltewulst aus einer Art Lochmembran. Letzterer arbeitet nach dem Prinzip einer ein- oder ausstülpenden Lippe. Solche Lochmembranen haben den Nachteil des Umschlagens bei entsprechend gewichtigen Anschlußsteilen. Außerdem ist die Steckverbindung nur mit ganz erheblichen Kräften erreichbar. Das Stirnende des Anschlußstutzens tritt nämlich zunächst stumpf gegen die äußere, ebene Ringfläche der Lochmembran.

Aufgabe der vorliegenden Erfindung ist es daher, hier Abhilfe zu schaffen und mit einfachen Mitteln einen Entlüftungsschlauch so auszubilden, daß man zum einen in dem besagten Anschlußbereich ohne zusätzliche Dichtmittel auskommt und zum andern einen leichtgängigeren Anschluß erzielt, dies bei einwandfreier Festlegung der zu verbindenden Teile.

Gelöst ist diese Aufgabe durch die im Anspruch 1 angegebene Erfindung.

Die Unteransprüche sind vorteilhafte Weiterbildungen des Erfindungsgegenstandes.

Zufolge solcher Ausgestaltung ist ein gattungsgemäßer Entlüftungsschlauch von erhöhtem Gebrauchswert erzielt: Die ohnehin vorliegende Flexibilität des Entlüftungsschlauchs ist hier sinnvoll genutzt zur Ausbildung einer elastischen Dichtungspartie, nämlich des abdichtenden Haltewulstes. Das macht besondere Dichtungsringe und damit zusammenhänge Montagevorbereitungen unnötig. Der entsprechende Anschluß ist praktisch narrensicher. Er ist auch leichtgängig. Neben einer einwandfreien Abdichtung läßt sich auf diesem Wege auch die gewünschte Festlegung erreichen, nämlich aus der Rückstellkraft des den Haltewulst bildenden Materialabschnittes. Konkret wird dazu so vorgegangen, daß der Haltewulst von einem Einstülpungsbereich der Übersteckstutzen-Wandung derart gebildet ist, daß sich auf der Mantelfläche des Übersteckstutzens eine umlaufende Ringnut erstreckt. Das hat vor allem den Vorteil, daß die verformenden Kräfte auch noch in die zylindrischen Abschnitte der Wandung wirken, das elastische Rückstellfeld also im Grunde vergrößert ist. Außerdem läßt sich die außenliegende Ringnut günstigst nutzen, indem man sie - nach einer Weiterbildung der Erfindung - zur Halterung eines darin einliegenden Klemmringes nutzt. Ein solcher Klemmring bietet eine zusätzliche, unterstützende Festlegungsvariante, bspw. insbesondere in größerkalibrigen Entlüftungsanlagen. Ein solcher Klemmring erhöht dabei die Einschnürwirkung und begünstigt sogleich die Dichtwirkung. Weiter erweist es sich als günstig, daß der Klemmring aus Federstahldraht besteht, dessen Endbereiche sich über einen Umfangsabschnitt überlappen und etwa radial auswärts weisende Handhaben aufweisen, welche von den Federdrahtenden gebildet sind. Zum Öffnen des Federringes brauchen die Enden lediglich gegeneinander gedrückt zu werden. Für eine einwandfreie Steckzuordnung erweist es sich weiter als vorteilhaft, daß der Haltewulst im Querschnitt konvex gewölbt ist. Hierdurch entsteht eine sowohl zentrierend wirkende, als auch kräfteverteilende Auflauffläche. Optimiert ist diese Ausgestaltung noch dadurch, daß die Wölbung (rotationssymmetrisch gesehen) sphärisch ausgebildet ist.

Der Gegenstand der Erfindung ist nachstehend anhand eines zeichnerisch veranschaulichten Ausführungsbeispieles erläutert. Es zeigt.

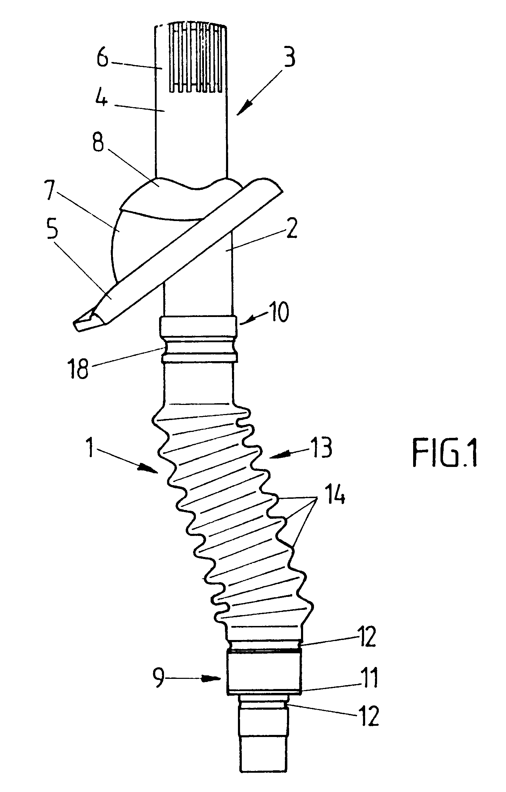

- Fig. 1: den erfindungsgemäßen Entlüftungsschlauch mit dem Anschlußstutzen einer Dachentlüftungspfanne verbunden,
- Fig. 2: einen Vertikalschnitt durch diesen Entlüftungsschlauch,
- Fig. 3: den Schlauch in Halbansicht, mehr die Endbereiche wiedergebend, also bei herausgeschnittenem Falten-Mittelteil,
- Fig. 4: eine Herausvergrößerung des abdichtenden Haltewulstes und
- Fig. 5: in perspektivischer Darstellung das übersteckstutzenseitige Ende des Entlüftungsschlauches mit zugeordnetem Klemmring.

Der Entlüftungsschlauch 1 besteht aus Kunststoff, und zwar Weich-PVC.

Er dient zur Verbindung einer nicht mehr dargestellten Entlüftungsleitung, bspw. Abwasserentlüftungsleitung, mit einem Anschlußstutzen 2 einer Dachentlüftungspfanne 3. Letzere weist ein Dachentlüftungsrohr 4 auf, welches oberhalb der durchsetzten Dacheindeckungsplatte 5 in eine schlagregensichere Haube 6 übergeht. Zur Erzielung einer Neigungsverstellung relativ zur Ebene der Eindeckungsplatte 5 formt diese eine die Dacheindeckungsplatte 5 überragende Kuppel 7, die von einer eine entsprechende innenseitige Führungsfläche aufweisenden Kappe 8 übergriffen ist. Das Entlüftungsrohr kann so der Dachneigung entsprechend in einem Verstellbereich von 20° bis 40° verstellt werden. Die die Vertikalstellung des Dachentlüftungsrohres bewirkenden Befestigungsmittel sind nicht mehr dargestellt.

Der Entlüftungsschlauch 1 formt einendig einen gestuften Einsteckstutzen 9 und anderendig, der Dachentlüftungspfanne 3 zugekehrt, einen Übersteckstutzen 10 für den Anschlußstutzen 2 aus.

Je nach dem gewünschten Steckverbund kann der nicht benötigte querschnittskleinere Stutzenabschnitt des Einsteckstutzens 9 abgetrennt werden. Die entsprechende Solltrennstelle ist mit 11 bezeichnet. Es handelt sich um eine Ringkerbe im Winkel von ca. 30°, wobei die untere Flanke senkrecht zur Längsmittelachse x-x des Entlüftungsschlauches 1 steht. Auf der Mantelfläche eines jeden Stutzenabschnitts befindet sich eine Ringnut 12 zur Einlagerung eines Dichtungsringes (nicht näher dargestellt).

Der Bereich zwischen Einsteckstutzen 9 und Übersteckstutzen 10 des Entlüftungsschlauches 1 ist als Harmonikakörper gestaltet. Dieser faltenbalgförmige Mittelteil 13 ist integraler Bestandteil des Entlüftungsschlauches, also einstückig mit diesem erzeugt, bspw. im Wege des Blasverfahrens. Die Faltenreihe 14 des Mittelteils endet innenseitig etwa auf Höhe des durchmessergrößten Stutzenabschnitts des Einsteckstutzens 9 bzw. Übersteckstutzens 10. Die Falten 14 sind ringförmig ausgeführt, natürlich kann auch eine wendelgangartige Faltenstruktur Platz greifen.

Der Übersteckstutzen 10 bildet einen ringförmigen, in das Rohrinnere gerichteten Haltewulst 15 aus. Letzterer tritt dichtend gegen die korrespondierende Mantelfläche 16 des Anschlußstutzens 2. Die dichtende Anlage beruht sowohl auf der Elastizität des Materiales wie auf der Flexibilität des Haltewulstes. Aus dieser Gesamtkonstellation ergibt sich auch eine einwandfreie, über längste Gebrauchszeiten haltbare Festlegung zwischen Anschlußstutzen 2 und Übersteckstutzen 10.

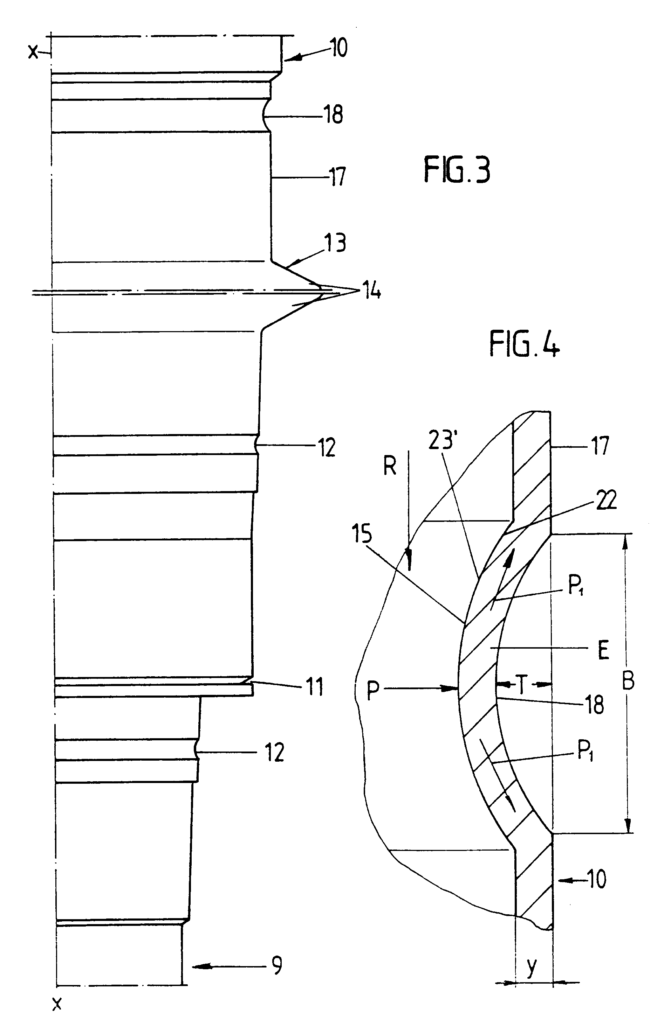

Wie Figur 4 besonders deutlich zeigt, ist der Haltewulst 15 von einem Einstülpungsbereich E der Übersteckstutzen-Wandung gebildet, und zwar derart, daß sich auf der Mantelfläche 17 des Übersteckstutzens 10 eine umlaufende Ringnut 18 erstreckt. Die Übersteckstutzen-Wandung setzt sich also praktisch in gleicher Dicke y über den die Ringnut 18 bildenden Bereich fort. Unter Berücksichtigung der in Richtung P wirkenden Belastung durch den Spann- oder Leibungsdruck des eingesetzten Anschlußstutzens 2 ergibt sich durch den brückenbogenartigen Wandungsabschnitt selbst bei recht weich eingestelltem Kunststoffmaterial ein guter Widerstand, wobei Kraftkomponenten P1 in die zylindrischen Abschnitte der Übersteckstuzen-Wandung einlaufen bzw. von diesen Abschnitten aufgenommen werden.

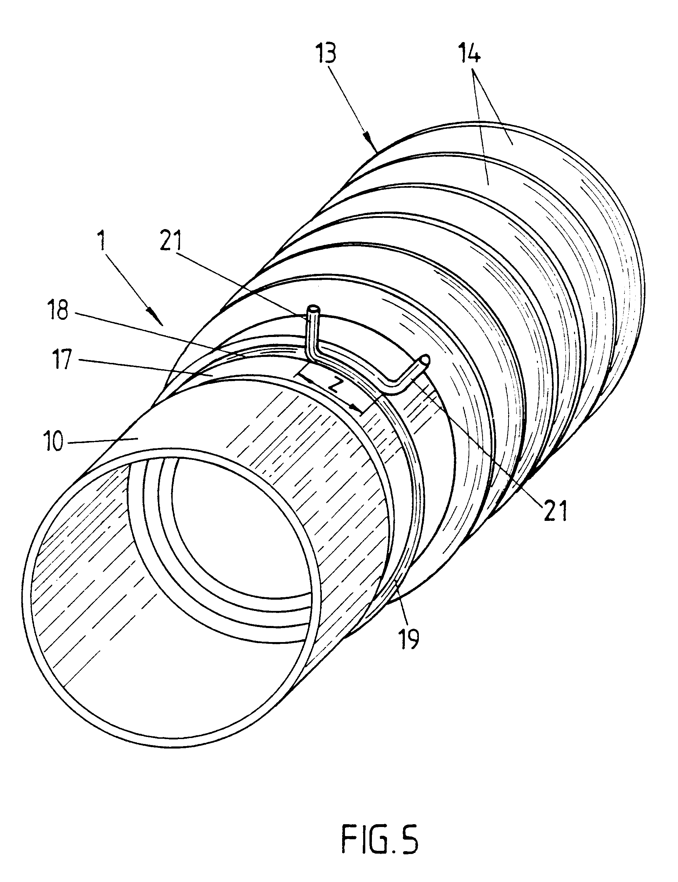

Die außenliegende Ringnut 18 kann gemäß Anwendungsbeispiel der Figur 5 zur Aufnahme eines Klemmringes 19 benutzt werden. Letzterer besteht aus Federstahldraht und weist eine, was die Einschnürungskraft angeht, gewisse Vorspannung auf. Zu seinem Einsetzen bzw. Lösen liegt ein Uberlappungsvorrat von der Länge z vor. Die diesen bildenden gegenläufig ausgerichteten Endbereiche 20 formen, radial nach auswärts gerichtete Handhaben 21, welche von den Federstahldrahtenden gebildet sind.

Zur erleichterten Steckverbindung ist der Haltewulst 15 im Querschnitt konvex gewölbt. So entsteht, in Einsteckrichtung R gesehen, eine Art zentrierend wirkende Auflauframpe 23' (siehe Figur 4). Die rotationssymmetrisch umlaufende Wölbung ist sphärisch gehalten. Wie die Zeichnung in Figur 4 zeigt, ist eine recht flache Wölbung realisiert. Die Tiefe T der Ringnut 18 entspricht etwa der eineinhalbfachen Dicke y der Übersteckstutzen-Wandung. In die Breite B der Ringnut 18 geht etwa achtmal das Maß der Dicke y. Der Wölbungsradius liegt etwa bei dem sechsfachen Maß der Dicke y.

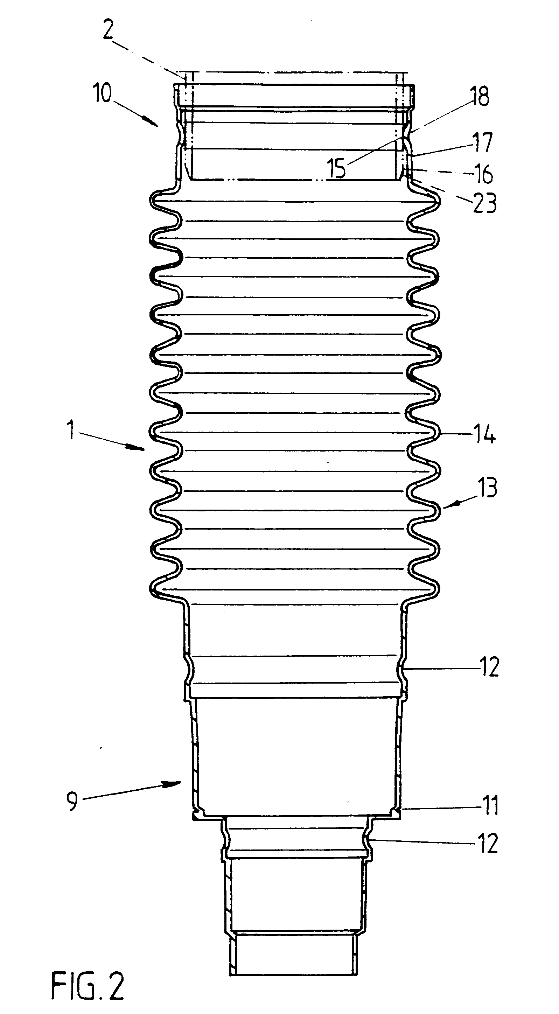

Um einen guten Gleitlauf auch anschlußstutzenseitig zu realisieren, ist die äußere Randkante gefast (vgl. Figur 2). Die Fassung trägt das Bezugszeichen 23.

## Patentansprüche

1. Einstückiger Entlüftungsschlauch (1) aus Kunststoff zur Verbindung einer Entlüftungsleitung mit einem Anschlußstutzen (2), mit einem faltenbalgförmigen Mittelteil (13), an das sich einendig ein Einsteckstutzen für die Entlüftungsleitung und anderendig ein Übersteckstutzen (10) für den Anschlußstutzen (2) anschließt, wobei am Übersteckstutzen (10) mindestens ein materialeinheitlich mit diesem ausgebildeter, in das Rohrinnere gerichteter, abdichtender Haltewulst (15) ausgebildet ist, dadurch gekennzeichnet, daß der Haltewulst (15) von einem Einstülpungsbereich (E) der Übersteckstutzen-Wandung derart gebildet ist, daß sich auf der Mantelfläche (17) des Übersteckstutzens (10) eine umlaufende Ringnut (18) erstreckt.

2. Einstückiger Entlüftungsschlauch nach Anspruch 1, gekennzeichnet durch einen in der Ringnut (18) einliegenden Klemmring (19).

3. Einstückiger Entlüftungsschlauch nach einem oder mehreren der vorhergehenden Ansprüche, dadurch gekennzeichnet, daß der Klemmring (19) aus Federstahldraht besteht, dessen Endbereiche (20) sich über einen Umfangsabschnitt (Länge z) überlappen und etwa radial auswärts weisende Handhaben (21) aufweisen, welche von den Federstahldrahtenden gebildet sind.

4. Einstückiger Entlüftungsschlauch nach einem oder mehreren der vorhergehenden Ansprüche, dadurch gekennzeichnet, daß der Haltewulst (15) im Querschnitt konvex gewölbt ist.

5. Einstückiger Entlüftungsschlauch nach Anspruch 4, dadurch gekennzeichnet, daß die Wölbung sphärisch ausgebildet ist.

## Claims

1. One-piece ventilation hose (1) made of plastic for connecting a vent line to a connecting socket (2), with a concertina-like central portion (13) to which is connected at one end an insertion socket for the vent line and at the other end a fit-over socket (10) for the connecting socket (2), wherein on the fit-over socket (10) is formed at least one sealing retaining bead (15) which is constructed in one piece with the material of the fit-over socket (10) and directed into the interior of the pipe, characterised in that the retaining bead (15) is formed by an indented region (E) of the wall of the fit-over socket (10) in such a way that a circumferential annular groove (18) extends over the cylindrical surface (17) of the fit-over socket (10).

2. One-piece ventilation hose according to claim 1, characterised by a clamping ring (19) located in the annular groove (18).

3. One-piece ventilation hose according to one or more of the preceding claims, characterised in that the clamping ring (19) is made of spring steel wire, the end regions (20) of which overlap each other over a circumferential section (length z) and comprise approximately radially outwardly pointing levers (21) which are formed by the ends of the spring steel wire.

4. One-piece ventilation hose according to one or more of the preceding claims, characterised in that the retaining bead (15) is convexly curved in cross-section.

5. One-piece ventilation hose according to claim 4, characterised in that the curvature is of spherical shape.

## Revendications

1. Gaine de ventilation flexible monobloc (1) en matière plastique, destinée à relier une conduite d'aération ou de ventilation à un embout de raccord (2), comprenant une partie médiane (13) en forme de soufflets et à laquelle se raccorde, à une extrémité, un embout d'enfichage pour la conduite d'aération ou de ventilation et à l'autre extrémité un embout d'enfichage à recouvrement (10) pour l'embout de raccord (2), au moins un bourrelet d'arrêt (15) étant formé sur l'embout d'enfichage à recouvrement (10), monobloc avec cet embout et dirigé vers l'intérieur du tube pour assurer l'étanchéité, caractérisée en ce que le bourrelet d'arrêt (15) est constitué par une zone rétreinte (E) de la paroi de l'embout d'enfichage à recouvrement, de telle façon qu'une rainure annulaire périphérique (18) s'étende sur la surface d'enveloppe (17) de l'embout d'enfichage à recouvrement (10).

2. Gaine flexible d'aération monobloc selon la revendication 1, caractérisée par une bague de serrage (19) insérée dans la rainure annulaire (18).

3. Gaine flexible d'aération monobloc selon l'une ou plusieurs des revendications précédentes, caractérisée en ce que la bague de serrage (19) est réalisée en fil d'acier à ressort dont les zones d'extrémités (20) se recouvrent sur un tronçon périphérique (longueur z) et comportent des prises manuelles ou leviers (21) orientées de façon sensiblement radiale vers l'extérieur et qui sont formées par les extrémités du fil d'acier à ressort.

4. Gaine flexible d'aération monobloc selon l'une ou plusieurs des revendications précédentes, caractérisée en ce que le bourrelet d'arrêt (15) présente une section transversale à courbure convexe.

5. Gaine flexible d'aération monobloc selon la revendication 4, caractérisée en ce que la courbure est sphérique.
